# FASCICULE DE BREVET EUROPEEN

(11) **EP 1 651 574 B1**
(45) Date de publication et mention de la délivrance du brevet: **08.02.2012**
(21) Numéro de dépôt: 04767762.0
(22) Date de dépôt: 22.07.2004
(51) Int. Cl.: C02F 3/00, C02F 3/30

(54) **PROCEDE DE TRAITEMENT BIOLOGIQUE DES EAUX PAR BOUES ACTIVEES AVEC EGULATION DE L'AERATION**
VERFAHREN ZUR BIOLOGISCHEN BEHANDLUNG VON WASSER UNTER VERWENDUNG VON BELEBTSCHLAMM UND MIT BELÜFTUNGSREGULIERUNG
METHOD FOR THE BIOLOGICAL TREATMENT OF WATER USING ACTIVATED SLUDGE AND COMPRISING AERATION REGULATION

(30) Priorité: 04.08.2003 FR 0309629
(43) Date de publication de la demande: 03.05.2006
(73) Titulaire: Veolia Water Solutions & Technologies Support, 94410 Saint-Maurice (FR)
(72) Inventeur: OGER, Loic, F-35590 Saint-Gilles (FR); TAZI PAIN, Annie, F-92600 Asnière (FR); PAYRAUDEAU, Michèle, F-75020 Paris (FR)
(74) Mandataire: Larcher, Dominique
(86) Numéro de dépôt international: PCT/FR2004/001963
(87) Numéro de publication internationale: WO 2005/021446

(56) Documents cités:
- EP-A- 0 550 367
- WO-A-00/37369
- US-A- 5 482 630
- US-A- 5 589 068
- HANSEN J: "FUZZY-REGELUNGEN ZUR OPTIMIERUNG DER NAEHRSTOFFELIMINATION IN KOMMUNALEN KLAERANLAGEN" KORRESPONDENZ ABWASSER, ABWASSERTECHNISCHE VEREINIGUNG, ST. AUGUSTIN, DE, vol. 45, no. 12, décembre 1998 (1998-12), pages 2259-2268, XP000803516 ISSN: 0341-1540

## Description

L'invention concerne le domaine du traitement biologique des eaux en vue de leur épuration.

De telles eaux peuvent être constituées, par exemple, par des eaux usées urbaines ou par des eaux industrielles.

Plus précisément, l'invention concerne les traitements biologiques des eaux selon la technique des boues activées ou selon la technique des cultures mixtes.

La technique des boues activées met en oeuvre une biomasse libre, c'est-à-dire non liée à un support, dans au moins un bassin pourvu de moyens d'aération

La technique des cultures mixtes met en oeuvre à la fois une biomasse libre et une biomasse liée à un support maintenu en suspension dans un bassin pourvu de moyens d'aération.

Selon ces techniques, la biomasse dégrade à la fois la pollution carbonée et la pollution azotée contenue dans les eaux à traiter.

Dans ce but, le ou les bassins(s) d'installation sont pourvus de moyens d'injection d'air ou d'oxygène (aération par fines bulles, turbines, brosses...) ci-après désignés par "moyens d'aération".

Le fonctionnement de ces moyens d'aération peut être séquencé de façon à organiser dans un même bassin des périodes d'aération et d'anoxie.

Selon un autre type d'installations, on prévoit dans le même bassin ou dans plusieurs bassins au moins une zone aérée et au moins une zone non aérée.

L'aération permet la dégradation de la pollution carbonée des eaux traitées et la nitrification de celles-ci.

La non-aération de ces eaux permet la dénitrification de celles-ci.

L'alternance de phases de nitrification et de phases de dénitrification permet de dégrader la pollution azotée des eaux à traiter.

Il est apparu que le fonctionnement des moyens d'aération et notamment l'alternance des phases d'aération et de non-aération doit faire l'objet d'une surveillance.

En effet, des études ont montré qu'un apport d'oxygène trop important à la biomasse par les moyens d'aération empêchait l'élimination correcte des nitrates, tandis qu'un apport en oxygène trop peu important limitait la destruction de l'ammoniaque.

Le fonctionnement des moyens d'aération doit donc être contrôlé en permanence de façon à respecter un compromis selon lequel l'apport en oxygène par les moyens d'aération dans les bassins d'aération ne doit être ni trop peu ni trop important.

Différents moyens ont été proposés dans l'état de la technique pour effectuer un tel contrôle.

Selon une première approche, il a été proposé de détecter, grâce à une sonde, la concentration en oxygène dissous de l'eau lors de son séjour dans les bassins de boues activées et, en fonction des relevés effectués et du niveau de sortie en NH₄ et NO₃, de faire varier les durées et les fréquences de fonctionnement des moyens d'aération de façon à doser la quantité d'oxygène apportée par ceux-ci.

Toutefois, une telle mesure de l'oxygène dissous ne permet pas de maintenir la teneur en nitrates de l'eau traitée à un seuil toujours acceptable dès lors que cette teneur en oxygène dissous est inférieure à 0,5 mg/litre.

Il a donc été proposé de coupler cette mesure de la concentration en oxygène dissous avec une mesure du potentiel d'oxydoréduction ("potentiel rédox") des eaux présentes dans le bassin de boues activées. Une telle technique est décrite dans le brevet FR 2779140. Toutefois, cette technique présente l'inconvénient de nécessité un réajustement manuel fréquent des valeurs de consigne du potentiel d'oxydoréduction. La régulation redox s'est avérée notamment peu efficace pour les installations biologiques mettant en oeuvre de membranes de filtration immergées dans des boues activées.

La technique décrite dans FR 2685692 propose quant à elle de mesurer le potentiel redox dans le bassin biologique pourvu de moyens d'aération, d'asservir le fonctionnement de ces moyens d'aération à au moins une valeur de consigne de ce potentiel redox et à asservir cette valeur de consigne du potentiel redox à une mesure de la teneur en nitrate et/ou en ammoniaque de l'effluent traité.

Cette technique bien qu'efficace présente l'inconvénient d'impliquer une fiabilité permanente des instruments de mesure, en particulier du nitratomètre ou de l'ammoniomètre qui viennent corriger en permanence les valeurs de consigne.

Le document WO 00/37369 décrit un procédé biologique de traitement d'eau ä l'intérieur duquel des périodes de mise en marche et arrêt de moyens d'aération sont alternés respectivement. Le niveau du potentiel redox est mesuré et l'aération est maintenue en fonction d'une valeur de consigne du potentiel redox et d'un temps minimal et d'un temps maximal d'aération et de non aération.

L'objectif de la présente invention est de proposer un procédé de traitement biologique des eaux par boues activées ou cultures mixtes, mettant en oeuvre un contrôle des moyens d'aération permettant une régulation de l'aération plus efficace que les procédés de l'état de la technique.

Notamment, un objectif de la présente invention est de décrire un tel procédé qui permette de limiter en permanence la teneur en pollution azotée de l'eau traitée à une valeur très basse, en pratique inférieure à 10 mg/litre.

Un autre objectif de l'invention est de décrire un tel procédé qui ne nécessite pas un ajustement manuel fréquent des seuils de régulation au cours du temps.

Encore un objectif de l'invention est de proposer un tel procédé qui puisse être utilisé pour tout type d'installation de traitement par boues activées ou cultures mixtes, et notamment dans celles mettant en oeuvre des membranes de filtration.

Egalement un objectif de la présente invention est de proposer un procédé qui conduise à une optimisation et à une diminution des consommations énergétiques liées à l'aération.

Encore un autre objectif de l'invention est de proposer un tel procédé représentant une fiabilité plus importante que les procédés de l'art antérieur.

Ces différents objectifs sont atteints grâce à l'invention qui concerne un procédé biologique de traitement d'eau comprenant les étapes consistant :
- à faire passer ladite eau dans au moins un bassin biologique accueillant une biomasse, bassin à l'intérieur duquel les périodes oxydantes et les périodes réductrices sont alternées respectivement par mise en marche et arrêt de moyens d'aération et
- à faire subir à la liqueur mixte du bassin biologique au moins une étape de séparation permettant d'obtenir des boues et de l'eau traitée
caractérisé en ce qu'il comprend les étapes préalables consistant à :
- fixer un temps minimal autorisé d'aération (T1min), un temps maximal autorisé d'aération (T1max) un temps minimal autorisé de non aération (T2min) et un temps maximal autorisé de non aération (T2max) de ladite liqueur mixte ;
- fixer une valeur basse de consigne (SB N03) et au moins une valeur haute de consigne (SH N03) de la teneur en nitrates de l'eau traitée ou de la liqueur mixte ;
- fixer au moins une valeur haute de consigne du potentiel d'oxydoréduction (SH redox) de ladite liqueur mixte ;
   et en ce qu'il comprend les étapes complémentaires consistant à
- mesurer continûment la teneur en nitrates de l'eau traitée ou de la liqueur mixte ;
- mesurer continûment le potentiel d'oxydoréduction de la liqueur mixte présente dans le bassin d'aération ;
- mesurer les temps T1 d'aération et T2 de non aération de la liqueur mixte ;
- à ne pas aérer la liqueur mixte
   soit tant que la teneur en nitrates mesurée reste inférieure à ladite valeur basse de consigne (SB N03) et que le temps T2 de non aération mesuré n'atteint pas le temps minimal autorisé de non aération T2min,
   soit lorsque la teneur en nitrates mesurée reste supérieure à ladite valeur basse de consigne (SB N03) et que le temps T2 de non aération mesuré est inférieur au temps maximal autorisé de non aération T2max ;
- à aérer la liqueur mixte
   soit tant que la teneur en nitrates mesurée reste supérieure à ladite valeur haute de consigne (SH N03) ou bien lorsque la valeur de potentiel d'oxydoréduction mesurée reste supérieure à ladite valeur haute de consigne du potentiel d'oxydoréduction (SH rédox), et que le temps T1 d'aération mesuré est inférieur au temps minimal autorisé d'aération T1min,
   soit lorsque la teneur en nitrates mesurée reste inférieure à ladite valeur haute de consigne (SH N03) ou lorsque la valeur de potentiel d'oxydoréduction mesurée reste inférieure à ladite valeur haute de consigne du potentiel d'oxydoréduction (SH rédox), et que le temps T1 d'aération mesuré n'atteint pas le temps maximal autorisé d'aération T1max.

Un tel procédé de traitement biologique avec régulation de l'aération est donc basé sur la mesure en continu des nitrates de l'eau traitée ou de la liqueur mixte et du potentiel redox de la liqueur mixte présente dans le bassin biologique.

Selon l'invention, l'injection d'air par les moyens d'aération est déclenchée dès lors que l'on observe l'une ou l'autre des conditions suivantes :
- première condition : la teneur en nitrate de l'effluent traité atteint une valeur basse (seuil bas) de consigne (SB N03) et une durée minimale d'anoxie a été observée (T2min).
- deuxième condition (alternative) : la teneur en nitrate de l'eau traitée ou de la liqueur mixte (SB N03) n'a pas atteint la valeur basse de consigne (SB N03) mais la durée maximale d'anoxie a été observée (T2max).

Les durées minimales T2min et maximales T2max de non-aération constituent une temporisation dont l'objet est de servir de sécurité en cas de dysfonctionnement du processus de dénitrification ou de dysfonctionnement des moyens de mesure de la teneur en nitrates.

La durée maximale autorisée de non aération (T2max) permet de limiter la période anoxique lorsque le processus de dénitrification ne se déroule pas de la façon souhaitée, c'est-à-dire lorsqu'il n'est pas possible d'atteindre la valeur basse prédéterminée pour la teneur en nitrates ou lorsqu'un dysfonctionnement se produit au niveau des moyens de mesure des nitrates.

La durée minimale autorisée de non aération (T2min) permet d'assurer une dénitrification minimale même en cas de dysfonctionnement de ces moyens de mesures.

Selon l'invention, l'injection d'air par les moyens d'aération est stoppée dès lors que l'on observe l'une ou l'autre des conditions suivantes:
- première condition : lorsque la teneur en nitrates de l'effluent traité atteint une valeur haute (seuil haut) de consigne(SH N03) ou lorsque le potentiel redox de l'eau dans le bassin d'aération atteint une valeur haute (seuil haut) de consigne (SH redox) et lorsque la durée minimale d'aération (T1min) a été observée;
- deuxième condition (alternative) : lorsque le seuil haut en nitrates de l'eau traitée (SH N03) ou le seuil haut du potentiel redox de l'eau présente dans le bassin d'aération (SH redox) n'a pas été atteint mais que la durée maximale d'aération T1max a été observée.

L'utilisation d'une valeur de consigne haute du potentiel redox permet de limiter l'aération, par exemple en période de faible charge.

Les durées minimales T1min et maximales T1max d'aération constituent une temporisation dont l'objet est de servir de sécurité en cas de dysfonctionnement du processus de nitrification ou de dysfonctionnement des moyens de mesure de la teneur en nitrates.

La durée minimale d'aération T1min garantit un temps minimum d'aération de la biomasse et constitue donc une sécurité en cas de dysfonctionnement des moyens de mesure de la teneur en nitrate de l'eau traitée ou de la liqueur mixte ou du potentiel d'oxydo réduction de la liqueur mixte présente dans le bassin d'aération.

La durée maximale d'aération T1max permet d'éviter une sur-aération du bassin biologique lorsqu'il est difficile d'atteindre le seuil haut de référence de la teneur en nitrate.

Selon une variante de l'invention, le procédé comprend les étapes préalables supplémentaires consistant à fixer une valeur très haute de consigne (STH N03) de la teneur en nitrates de l'eau traitée ou de la liqueur mixte et une valeur très haute de consigne (STH Rédox) du potentiel d'oxydoréduction de la liqueur mixte,
et en ce qu'il consiste :
- à ne pas aérer la liqueur mixte
   soit tant que la teneur en nitrates mesurée reste inférieure à ladite valeur basse de consigne (SB N03) et que le temps T2 de non aération mesuré est inférieur au temps minimal autorisé de non aération T2min,
   soit lorsque la teneur en nitrates mesurée reste supérieure à ladite valeur basse de consigne (SB N03) mais que le temps T2 de non aération mesuré n'atteint pas le temps maximal autorisé de non aération T2max ;
- à aérer la liqueur mixte
   soit tant que la teneur en nitrates mesurée reste supérieure à ladite valeur haute de consigne (SH N03) ou que la valeur de potentiel d'oxydoréduction mesurée reste supérieure à ladite valeur haute de consigne du potentiel d'oxydoréduction (SH rédox,
   et que le temps T1 d'aération mesuré est inférieur au temps minimal autorisé d'aération T1min,
   et que la teneur en nitrates mesurée n'atteint pas ladite valeur très haute de consigne(STH N03) ou que le potentiel d'oxydoréduction mesuré n'atteint pas ladite valeur très haute de consigne (STH Rédox).
   soit lorsque la teneur en nitrates mesurée reste inférieure à ladite valeur haute de consigne (SH N03) ou que la valeur de potentiel d'oxydoréduction mesurée reste inférieure à ladite valeur haute de consigne du potentiel d'oxydoréduction (SH rédox), mais que le temps T1 d'aération mesuré n'atteint pas le temps maximal autorisé d'aération T1max.

L'utilisation d'un seuil très haut en nitrates permet de limiter les problèmes de sur-aération lorsque l'eau à traiter présente une concentration en pollution plus faible que la normale. Un tel événement se produit notamment lorsque l'eau à traiter est constituée par des effluents urbains incluant les eaux recueillies lors d'un événement pluvieux important.

L'utilisation d'un seuil très haut en nitrates (STH N03) permet d'éviter l'apport d'oxygène dissous en excès dans le bassin biologique. Lorsque ce seuil très haut est atteint, l'aération est arrêtée sans tenir compte des temps minimaux et maximaux autorisés d'aération. Ainsi, le procédé permet de s'affranchir d'une multiplication des temporisations adaptées aux différentes qualités de l'eau à traiter.

L'utilisation d'un seuil très haut du potentiel redox (STH redox) permet quant à lui de stopper l'aération même si le niveau très haut en nitrate n'est pas atteint. L'utilisation de ce seuil très haut du potentiel redox est surtout utile lorsque l'eau à traiter est peu chargée en pollution organique. Cela se produit notamment lorsque l'eau à traiter est un effluent urbain extrêmement dilué, par exemple du type de ceux recueillis en période nocturne .

L'aération pourra être mise en oeuvre selon un ou plusieurs débits d'air donnés. La valeur de ces débits d'air pourra être fixée en fonction de la connaissance par expérience du niveau de pollution arrivant sur une période donnéé, par exemple une journée. On pourra ainsi fixer, pour le traitement des effluents urbains, un débit d'air élevé pendant les pointes de pollution, un débit d'air moyen, et un débit d'air faible pour les creux de pollution (par exemple la nuit)

Toutefois, selon une variante de l'invention, le débit d'air sera continûment régulé, ce qui permettra d'adapter le procédé aux variations de charge de l'eau à traiter.

Selon cette variante de l'invention, le procédé selon l'invention comprend les étapes supplémentaires consistant à :
- fixer au moins une valeur de consigne de la pente de la courbe représentative de l'évolution dans le temps du potentiel d'oxydoréduction dans le bassin ;
- calculer en continu ladite pente ;
- réguler continûment le débit d'air dispensé durant l'aération pour conserver une pente rédox environ égale à ladite valeur de consigne de pente.

La procédé selon l'invention permet alors non seulement de gérer les périodes d'aération et de non aération mais également de gérer l'intensité de l'aération durant les périodes d'aération.

Une telle intégration du calcul de la pente du potentiel d'oxydoréduction permet ainsi d'améliorer encore la qualité du procédé selon l'invention.

Le procédé selon l'invention pourra être mis en oeuvre dans différents types de procédé de traitement d'eau.

Ainsi, l'invention pourra être utilisée lorsque l'étape de séparation de la liqueur mixte provenant du bassin biologique sera une étape de décantation effectuée dans un décanteur classique, lamellaire ou non.

L'invention pourra aussi être mise en oeuvre lorsque cette étape de séparation sera une étape de filtration sur membrane(s). Dans ce cas, les membranes pourront être mises en oeuvre dans au moins une boucle externe de filtration ayant des membranes immergées ou sous pression, ou être des membranes immergées dans le bassin.

De telles membranes immergées sont généralement couplées à des moyens propres d'aération visant à prévenir leur colmatage ou, en cas de décolmatage, à les décolmater.

Dans un tel cas de figure, le procédé selon l'invention comprendra préférentiellement une étape supplémentaire consistant à mesurer le débit d'eau filtrée par les membranes et à réguler le débit d'air dispensé pour le décolmatage de celles-ci en fonction de ce débit d'eau filtrée. En effet, l'air utilisé pour décolmater les membranes participe pour une part à l'oxygénation du milieu présent dans le bassin puisque les membranes sont immergées dans celui-ci.

L'invention couvre également différents type d'installation pour la mise en oeuvre du procédé décrit ci-dessus.

L'invention couvre ainsi toute installation présentant des moyens d'amenée d'une eau à traiter, au moins un bassin biologique accueillant des boues activées ou mixtes muni de moyens d'aération, des moyens de filtration membranaire, et des moyens d'évacuation de l'eau filtrée provenant desdits moyens de filtration membranaire,
caractérisée en ce qu'elle présente des moyens de mesure de la teneur en nitrates prévus sur lesdits moyens d'évacuation ou dans ledit bassin biologique, des moyens de mesure du potentiel d'oxydoréduction prévus dans ledit bassin biologique, des moyens de régulation conçus pour agir sur lesdits moyens d'aération en fonction des mesures transmises par lesdits moyens de mesure des nitrates et du potentiel d'oxydoréduction, lesdits moyens de régulation comprenant des moyens de saisies de valeur(s) de consigne du potentiel d'oxydoréduction, de valeur(s) de consigne de la concentration en nitrates, de temps minimum et maximum d'aération et de non-aération.

Selon une variante, lesdits moyens de régulation de l'installation comprennent aussi des moyens de saisies de valeur(s) de consigne de la pente rédox.

Selon une variante, lesdits moyens de filtration membranaire sont prévus sur une boucle externe au bassin principal de boues activées avec des membranes immergées ou sous pression.

Selon une autre variante, lesdits moyens de filtration membranaire sont immergés dans ledit bassin biologique et coopèrent avec des moyens d'aération aptes à dispenser de l'air pour prévenir leur colmatage ou pour les décolmater.

Dans ce cas, l'installation comprend préférentiellement des moyens de mesure du débit d'eau filtrée prévus sur lesdits moyens d'évacuation et des seconds moyens de régulation conçus pour agir sur lesdits moyens d'aération en fonction des mesures transmises par lesdits moyens de mesure du débit.

L'invention, ainsi que les différents avantages qu'elle présente seront plus facilement compris grâce à la description qui va suivre de différents modes de réalisation de celle-ci donnés en référence aux dessins dans lesquels :
- les figures 1 à 4 représentent schématiquement différentes installations de traitement biologique d'eau pour la mise en oeuvre du procédé selon l'invention ;
- les figures 5 à 7 représentent différents organigrammes représentatifs du procédé selon l'invention selon trois de ses variantes ;
- la figure 8 représente l'évolution de la teneur en nitrates d'une eau traité selon une première variante du procédé selon l'invention ("régulation nitrates-rédox") ;
- la figure 9 représente l'évolution de la teneur en nitrates d'une eau traité selon une seconde variante du procédé selon l'invention ("régulation nitrates-rédox-pente rédox") ;

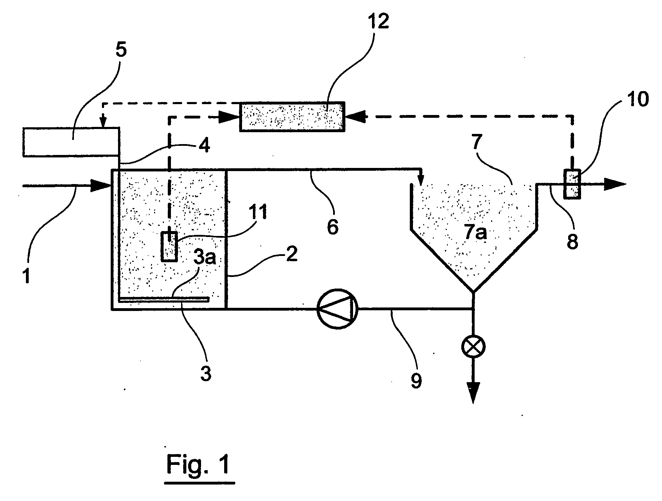

En référence à la figure 1, une installation pour le traitement biologique d'eaux usées est représentée schématiquement.

Cette installation comprend des moyens d'arrivée d'eau à traiter 1, un bassin biologique 2 accueillant une biomasse et pourvu de moyens d'aération 3.

Les moyens d'aération 3 incluent une canalisation d'amenée d'air 4 reliée à une rampe d'aération 3a prévue dans la partie inférieure du bassin 2 et des moyens 5 qui permettent de mettre en marche l'aération et de la stopper et,le cas échéant de régler le débit d'air dispensé par la rampe 3a.

La biomasse présente dans le bassin biologique 2 permet de dégrader la pollution carbonée et la pollution azotée par alternance de phases d'aération pendant lesquelles les moyens d'aération 3 fonctionnent et de phases d'anoxie pendant lesquelles les moyens d'aération ne fonctionnent pas.

La liqueur mixte, constituée par l'eau et les boues présentes dans le bassin d'aération 2, est évacuée par une canalisation 6 qui dirige cette liqueur mixte vers des moyens de séparation 7.

Ces moyens sont, dans le cas d'espèce, constitués par un décanteur 7a. Ce décanteur 7a permet de séparer la liqueur mixte en un effluent traité qui est évacué par une canalisation 8 et en une boue 9 qui est recyclée au moins en partie vers le bassin biologique 2.

Pour la mise en oeuvre du procédé selon l'invention, l'installation comprend des moyens de mesure de la teneur en nitrates (ci-après "nitratomètre") 10 prévus sur la canalisation 8 d'évacuation de l'eau traitée provenant du décanteur 7a et de moyens de mesure du potentiel d'oxydoréduction 11 installé dans le bassin biologique 2. En variante, le nitratomètre pourra être installé dans la liqueur mixte

L'installation comprend également des moyens de régulation 12 conçus pour agir sur lesdits moyens d'aération 3,3a,4,5 en fonction des mesures transmises par lesdits moyens de mesure des nitrates 10 et du potentiel d'oxydoréduction, 11. Ces moyens de régulation 12 comprennent des moyens de saisies de valeur(s) de consigne du potentiel d'oxydoréduction, de valeur(s) de consigne de la concentration en nitrates, de temps minimum et maximum d'aération et de non-aération.

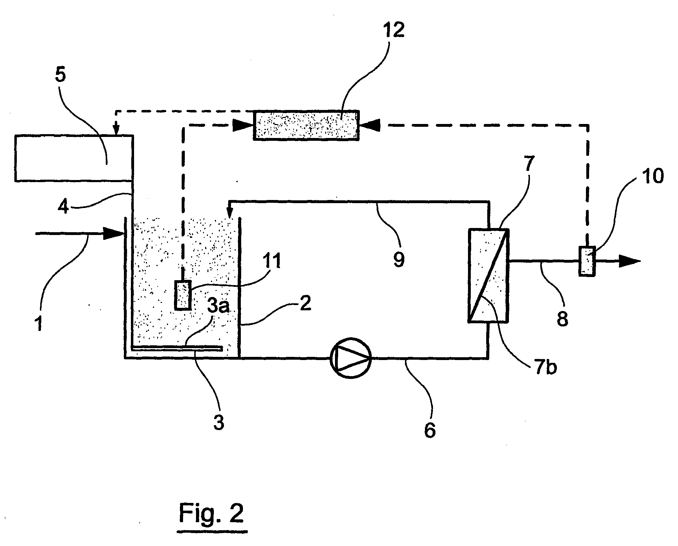

La figure 2 représente une autre installation susceptible d'être utilisée pour la mise en oeuvre du procédé selon l'invention. Cette installation diffère de celle représentée à la figure 1 uniquement par la caractéristique selon laquelle les moyens de séparation de la liqueur mixte provenant du bassin 2 sont constitués par des moyens de filtration membranaire 7b incluant une membrane et non plus par un décanteur 7a. Ces moyens de filtration membranaires sont prévus sur une boucle de filtration, constituée par la canalisation 6 d'amenée de la liqueur mixte provenant du bassin 2 et par une canalisation 9 retournant le rétentat des membranes vers celui-ci. Ces moyens de filtration sont soit sous pression soit immergés dans un bassin autre que le bassin 2.

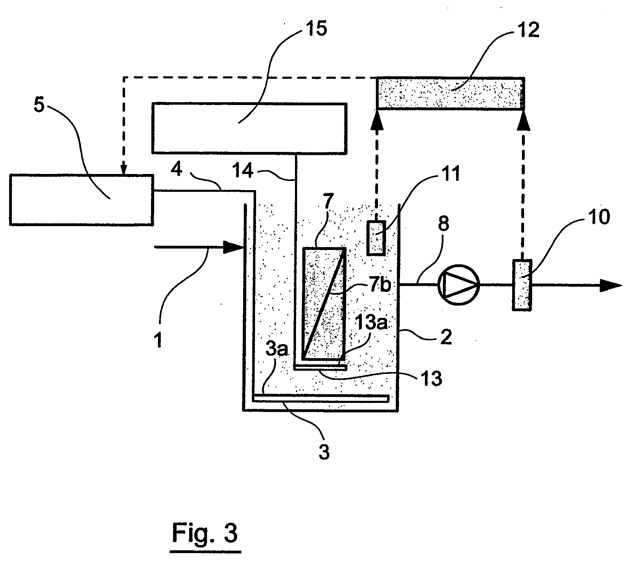

La figure 3 représente, également de façon schématique, un troisième type d'installation susceptible d'être utilisée pour la mise en oeuvre du procédé selon l'invention.

Cette installation ne diffère de celle représentée à la figure 2 que par la caractéristique selon laquelle les moyens de séparation membranaire 7b ne sont pas prévus sur une boucle de filtration extérieure au bassin 2 mais sont immergés dans celui-ci et par la caractéristique selon laquelle ces moyens de filtration membranaire 7 coopèrent avec des moyens d'aération 13 incluant une rampe d'aération 13a prévue sous les membranes et conçue pour dispenser de l'air à celle-ci pour prévenir son colmatage ou, le cas échéant, pour la décolmater. Cette rampe 13a est reliée par une canalisation d'amenée d'air 14 à des moyens 15 permettant de mettre en marche l'aération de la membrane, de stopper cette aération et de régler le débit d'air dispensé par celle-ci.

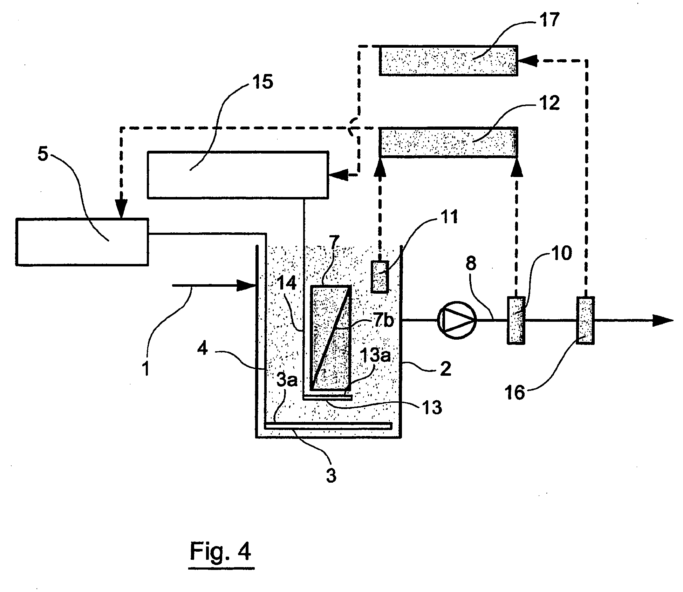

La figure 4 représente encore un autre type d'installation pour la mise en oeuvre du procédé.

Cette installation ne diffère de celle représentée à la figure 3 que par les caractéristiques selon lesquelles un débitmètre 16 est également sur la canalisation 8, ce débitmètre 16 fournissant en continu une information sur le débit d'eau filtrée sortant des moyens de filtration membranaire 7b à des moyens de régulation 17 permettant d'agir sur les moyens 15 pour mettre en marche, stopper ou régler le débit d'air dispensé par la rampe 13a.

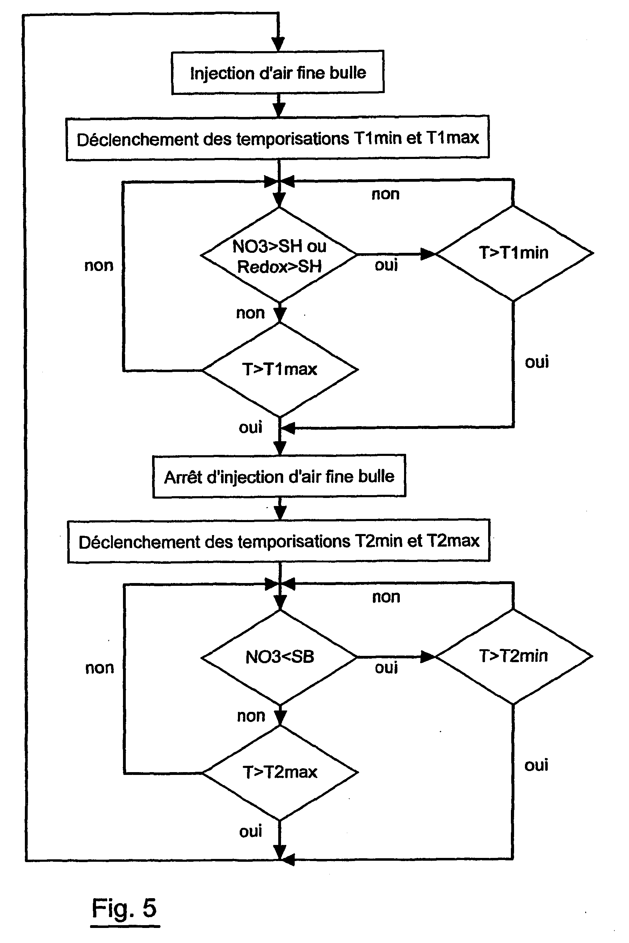

Les installations représentées aux figures 1 à 4 peuvent être utilisées pour la mise en oeuvre de différentes variantes du procédé selon l'invention détaillées ci-après en référence aux organigrammes représentés aux figures 5, 6 et 7.

Selon une première variante représentée à la figure 5, les moyens 12 sont paramétrés avec une valeur haute de consigne de la teneur en nitrates de l'eau traitée (SH N03), une valeur basse de consigne de la teneur en nitrates (SB N03), une valeur haute de consigne du potentiel d'oxydoréduction, un temps minimal d'aération (T1min), un temps maximal d'aération (T1max), un temps minimal de non aération (T2min), un temps maximal de non-aération (T2max).

A titre d'exemple non limitatif, on peut par exemple citer pour le traitement d'une eau usée l'utilisation des valeurs suivantes pour ces paramètres :
- SH NO3 : 6mg/l
- SB NO3 : 1 mg/l
- SH redox : 150 mV
- T1min : 10 mn
- T1max : 60 mn
- T2min : 15 mn
- T2max : 120 mn.

En référence à l'organigramme selon la figure 5, le fonctionnement de l'installation est alors le suivant.

Le nitratomètre 10 mesure de façon continue la teneur en nitrates de l'effluent traité évacué par la canalisation 8 tandis que l'appareil 11 mesure en continu le potentiel d'oxydoréduction de la liqueur mixte présente dans le bassin d'aération 2.

Tant que la mesure relevée par le nitratomètre 10 n'excède pas 6 mg/litre (SH N03) ou tant que la mesure relevée par l'appareil 11 n'excède pas 150 mV et tant que la durée d'aération minimale de 10 mn (T1min) n'a pas été observée, les moyens d'aération dispensent de l'air par la rampe 3a jusque ce que la durée d'aération atteigne 60 mn (T1max).

Lorsque T1max est atteint, l'injection d'air par les moyens 5 dans la rampe 3a est stoppée même si le taux de nitrates ne dépasse pas 6 mg/l ou même si le potentiel rédox n'excède pas 150 mV.

Une fois l'injection d'air arrêtée, cet arrêt est prolongé tant que la teneur en nitrate mesurée par le nitratomètre 10 n'atteint pas 1mg/l (SB N03) et tant que la durée de non-aération minimale de 15 mn (T2min) n'a pas été observée

Lorsque T2max (120 mn) est atteint, l'aération est reprise même si la valeur basse de consigne (SB N03) n'est pas atteinte.

Les temporisations T1min, T1max, T2min, T2max servent de garde-fous en cas de dysfonctionnement du nitratomètre ou de l'appareil de mesure du potentiel redox.

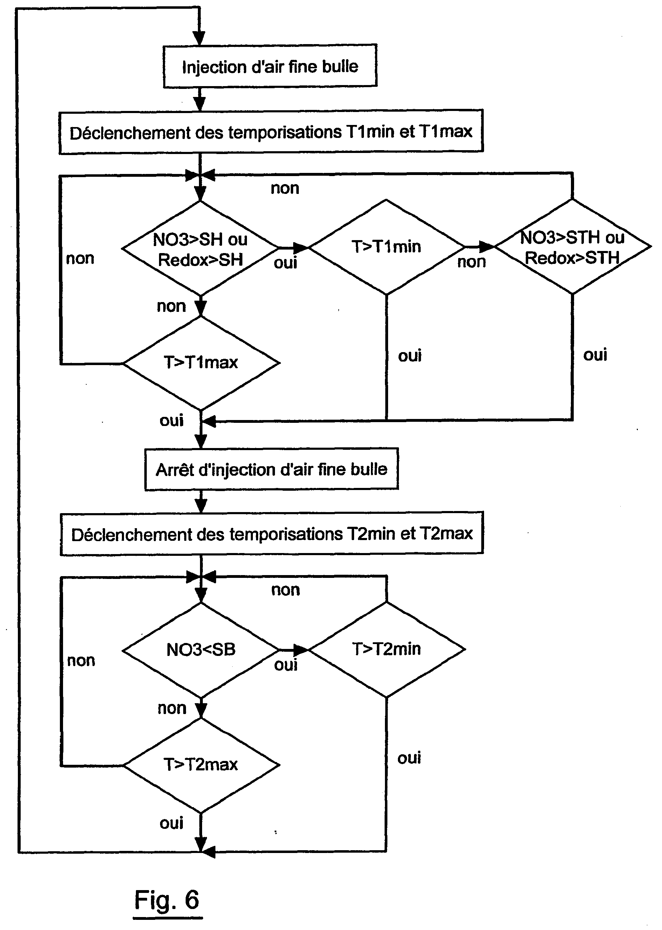

Une autre variante du procédé selon l'invention est symbolisée sur l'organigramme représenté à la figure 6.

L'utilisation d'un seuil très haut du potentiel d'oxydoréduction SH redox permet de limiter l'aération dans certains cas notamment en période de faible charge.

Selon ce mode de réalisation, les moyens 12 sont paramétrés, en plus des paramètres SH N03, SB N03, SH redox, T1min, T2min, T1max, T2max, avec une valeur très haute de consigne de la teneur en nitrate (STH N03) et avec une valeur très haute de consigne du potentiel d'oxydoréduction (STH redox).

A titre d'exemple, STH N03 peut être égal à 13 mg/litre et STH redox peut être de 200 mV.

L'utilisation de ces valeurs de consigne très hautes permet de stopper l'aération si les mesures relevées par le nitratomètre 10 ou l'appareil 11 de mesure du potentiel rédox dépassent ces valeurs de consigne, et ce même si le temps minimal d'aération n'a pas été respectée.

L'utilisation d'une valeur de consigne très haute pour la teneur en nitrate permet de s'affranchir d'une multiplication des temporisations adaptées aux différentes qualités de l'eau à traiter.

L'utilisation d'une valeur de consigne très haute du potentiel d'oxydoréduction s'avère particulièrement utile lorsque l'effluent à traiter est dilué.

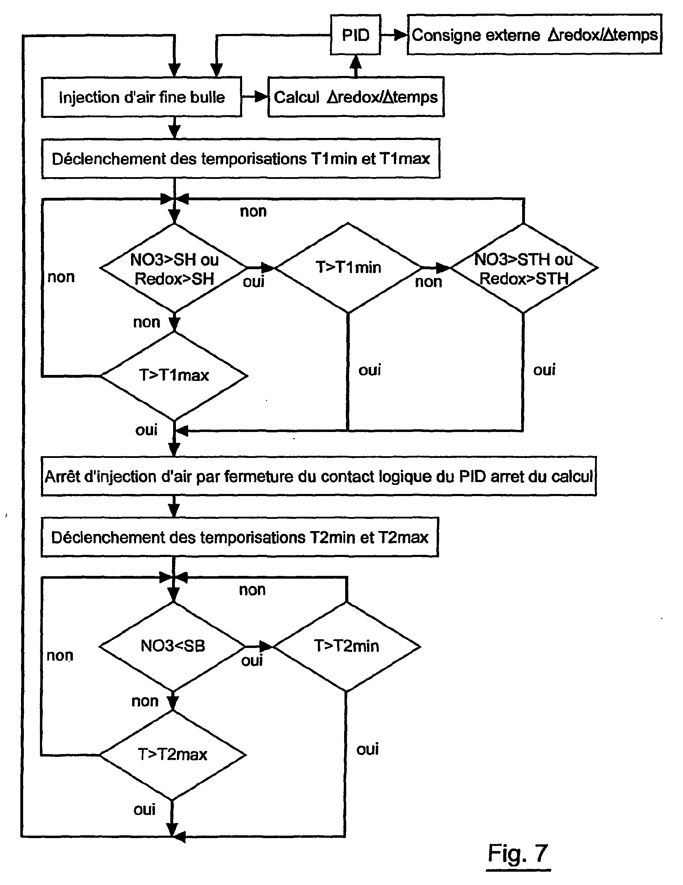

Selon une autre variante du procédé selon l'invention, décrit en référence à l'organigramme indiqué à la figure 7, les moyens 12 sont également paramétrés avec une valeur de consigne de la pente de la courbe représentative de l'évolution dans le temps du potentiel d'oxydoréduction de la liqueur mixte présente dans le bassin. Cette valeur de consigne peut par exemple être fixée à 5 mv/mn.

Les moyens 12 permettent de calculer à partir des données fournies par l'appareil 11 en permanence cette pente (dredox/dt) et de réguler l'injection d'air en augmentant le débit d'air (Qair) si la pente est plus faible que la consigne et inversement.

Une installation pilote du type de celle représentée à la figure 3 mettant en oeuvre des moyens de filtration membranaire 7 immergés dans un bassin de boues activées 2, a été utilisée pour tester différents procédés de régulation de l'aération dans le bassin 2, à savoir une régulation basée selon l'état de la technique sur la seule mesure du potentiel d'oxydoréduction dans le bassin de boues activées.
- une régulation selon la variante du procédé symbolisé sur l'organigramme de la figure 6 ('régulation nitrates - redox") ;
- une régulation selon la variante du procédé symbolisé sur l'organigramme selon la figure 7 ("regulation nitrates - redox - pente rédox").

Dans le cadre de la régulation nitrate-redox, on a utilisé les paramètres de réglage suivants :
- SB N03 : 1 mg/l;
- SH N03 : 6 mg/l;
- STH N03 : 13 mg/l;
- SH redox : 150 mV ;
- STH redox : 200 mV.

Le procédé a été testé avec une eau brute présentant les pollutions suivantes :
- DCO total : 466 mg/l;
- NNH4 : 36,4 mg/l;
- N total : 46,7 mg/l.

On notera que les moyens d'aération ont été mis en oeuvre selon deux débits, à savoir un débit de 5 Nm³/h ou de 24 Nm³/h.

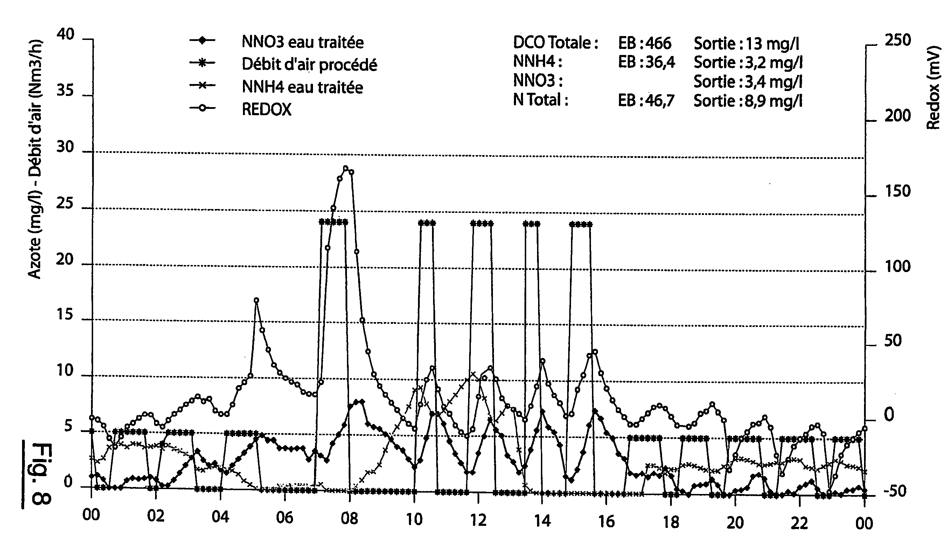

L'évolution des teneurs en ammoniaque et en nitrate de l'eau traitée et du potentiel d'oxydoréduction de l'eau présente dans le bassin est représentée sur la figure 8. Avec un telle régulation nitrate-redox selon l'invention, les teneurs en azote totales de l'eau traitée sont égales à 8,9 mg/l.

En cas de forte charge ponctuelle, on pourra observer une dégradation des rendements d'épuration liée à une diminution de la nitrification par un manque d'apport d'oxygène.

En cas de faible charge, on pourra par contre observer une dégradation de la dénitrification par une sur-aération dans le traitement d'un effluent dilué.

Lors de tels événements, il est nécessaire d'ajuster manuellement les débits d'air ou les temporisations au cours de la journée. Toutefois, un tel ajustement peut se révéler non fiable si la qualité de l'effluent varie trop souvent.

Dans une telle hypothèse, le procédé selon la variante de l'invention représentée à l'organigramme selon la figure 7 ("régulation nitrates rédox pente rédox ") peut être avantageusement utilisé.

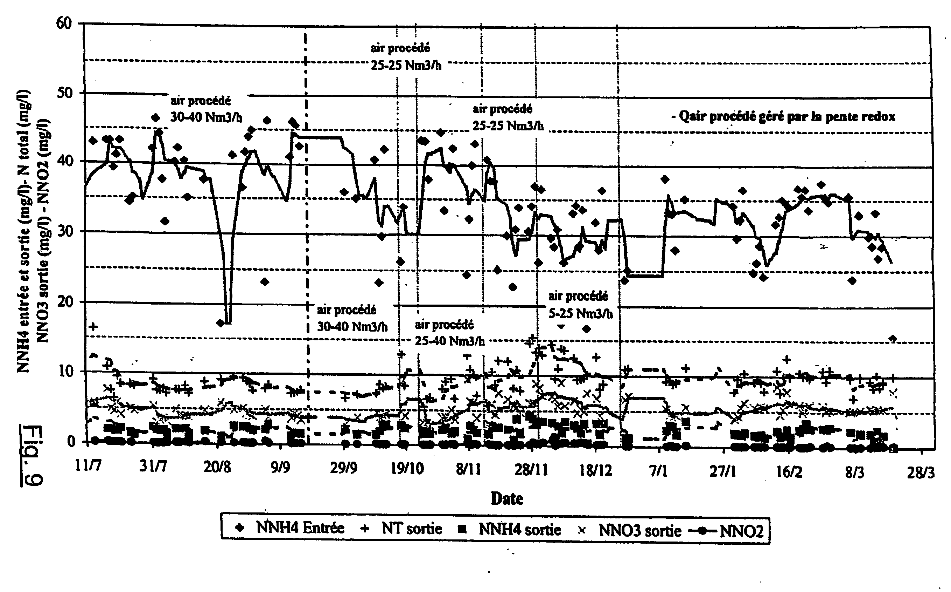

La figure 9 permet d'illustrer l'intérêt de la régulation du débit d'air avec une consigne de pente de 5 mV/mn. Malgré la variabilité de la dilution de l'eau à traiter, les teneurs en azote restent toujours en moyenne aux environs de 10 mg/l.

## Revendications

1. Procédé biologique de traitement d'eau comprenant les étapes consistant :
- à faire passer ladite eau dans au moins un bassin biologique accueillant une biomasse libre ou mixte, bassin à l'intérieur duquel les périodes oxydantes et les périodes réductrices sont alternées respectivement par mise en marche et arrêt de moyens d'aération et
- à faire subir à la liqueur mixte du bassin biologique au moins une étape de séparation permettant d'obtenir des boues et de l'eau traitée
**caractérisé en ce qu'**il comprend les étapes préalables consistant à :
- fixer un temps minimal autorisé d'aération (T1min), un temps maximal autorisé d'aération (T1max) un temps minimal autorisé de non aération (T2min) et un temps maximal autorisé de non aération (T2max) de ladite liqueur mixte ;
- fixer une valeur basse de consigne (SB N03) et au moins une valeur haute de consigne (SH N03) de la teneur en nitrates de l'eau traitée ou de la liqueur mixte ;
- fixer au moins une valeur haute de consigne du potentiel d'oxydoréduction (SH redox) de ladite liqueur mixte ;
et **en ce qu'**il comprend les étapes complémentaires consistant à :
- mesurer continûment la teneur en nitrates de l'eau traitée ou de la liqueur mixte;
- mesurer continûment le potentiel d'oxydoréduction de la liqueur mixte présente dans le bassin d'aération ;
- mesurer les temps T1 d'aération et T2 de non aération de la liqueur mixte ;
- à ne pas aérer la liqueur mixte
soit tant que la teneur en nitrates mesurée reste inférieure à ladite valeur basse de consigne (SB N03) et que le temps T2 de non aération mesuré est inférieur au temps minimal autorisé de non aération T2min,
soit lorsque la teneur en nitrates mesurée reste supérieure à ladite valeur basse de consigne (SB NO3) mais que le temps T2 de non aération mesuré n'atteint pas le temps maximal autorisé de non aération T2max ;
- à aérer la liqueur mixte
soit tant que la teneur en nitrates mesurée reste supérieure à ladite valeur haute de consigne (SH NO3) ou bien lorsque la valeur de potentiel d'oxydoréduction mesurée reste supérieure à ladite valeur haute de consigne du potentiel d'oxydoréduction (SH rédox), et que le temps T1 d'aération mesuré est inférieur au temps minimal autorisé d'aération T1min,
soit lorsque la teneur en nitrates mesurée reste inférieure à ladite valeur haute de consigne (SH NO3) ou lorsque la valeur de potentiel d'oxydoréduction mesurée reste inférieure à ladite valeur haute de consigne du potentiel d'oxydoréduction (SH rédox), mais que le temps T1 d'aération mesuré n'atteint pas le temps maximal autorisé d'aération T1max.

2. Procédé selon la revendication 1 **caractérisé en ce qu'**il comprend les étapes préalables supplémentaires consistant à fixer une valeur très haute de consigne (STH NO3) de la teneur en nitrates de l'eau traitée ou de la liqueur mixte et une valeur très haute de consigne (STH rédox) du potentiel d'oxydoréduction de la liqueur mixte,
et **en ce qu'**il consiste :
- à ne pas aérer la liqueur mixte
soit tant que la teneur en nitrates mesurée reste inférieure à ladite valeur basse de consigne (SB NO3) et que le temps T2 de non aération mesuré est inférieur au temps minimal autorisé de non aération T2min,
soit lorsque la teneur en nitrates mesurée reste supérieure à ladite valeur basse de consigne (SB NO3) mais que le temps T2 de non aération mesuré n'atteint pas le temps maximal autorisé de non aération T2max ;
- à aérer la liqueur mixte
soit tant que la teneur en nitrates mesurée reste supérieure à ladite valeur haute de consigne (SH NO3) ou que la valeur de potentiel d'oxydoréduction mesurée reste supérieure à ladite valeur haute de consigne du potentiel d'oxydoréduction (SH rédox),
et que le temps T1 d'aération mesuré est inférieur au temps minimal autorisé d'aération T1min,
et que la teneur en nitrates mesurée n'atteint pas ladite valeur très haute de consigne (STH NO3) ou que le potentiel d'oxydoréduction mesuré n'atteint pas ladite valeur très haute de consigne (STH rédox) ;
soit lorsque la teneur en nitrates mesurée reste inférieure à ladite valeur haute de consigne (SH NO3) ou lorsque la valeur de potentiel d'oxydoréduction mesurée reste inférieure à ladite valeur haute de consigne du potentiel d'oxydoréduction (SH rédox), mais que le temps T1 d'aération mesuré n'atteint pas le temps maximal autorisé d'aération T1max.

3. Procédé selon la revendication 2 **caractérisé en ce qu'**il comprend les étapes supplémentaires consistant à :
- fixer au moins une valeur de consigne de la pente de la courbe représentative de l'évolution du potentiel d'oxydoréduction de la liqueur mixte dans le temps,
- calculer en continu ladite pente
- réguler continûment le débit d'air dispensé durant l'aération pour conserver une pente rédox constante et environ égale à ladite valeur de consigne de pente

4. Procédé selon l'une quelconque des revendications 1 à 3 **caractérisé en ce que** ladite étape de séparation est une étape de décantation.

5. Procédé selon l'une quelconque des revendications 1 à 3 **caractérisé en ce que** ladite étape de séparation est une étape de filtration sur au moins une membrane de filtration.

6. Procédé selon la revendication 5 **caractérisée en ce que** ladite étape de séparation consiste à filtrer sur membranes la liqueur mixte sortant dudit bassin biologique et est mise en oeuvre dans au moins une boucle externe de filtration ayant des membranes immergées ou sous-pression.

7. Procédé selon la revendication 5 **caractérisée en ce que** ladite étape de séparation est effectuée grâce à au moins une membrane immergée dans ledit bassin biologique;

8. Procédé selon les revendications 3 et 7 comprenant une étape d'aération de ladite membrane immergée visant à prévenir son colmatage ou à la décolmater et en ce qu'il comprend les étapes consistant à mesurer le débit d'eau filtrée et à réguler le débit d'air dispensé pour l'aération de ladite membrane en fonction du débit d'eau filtrée.

## Claims

1. Biological water treatment process including the following steps:
- making the said water pass in at least one biological pond provided with a free or mixed biomass, pond inside which oxidising and reducing periods are alternated by starting and stopping aeration means, and
- performing at least one separation step on the mixed liquor in the biological pond so as to obtain sludge and treated water,
**characterised in that** it comprises preliminary steps consisting of:
- fixing a minimum allowable aeration time (T1min), a maximum allowable aeration time (T1max), a minimum allowable non-aeration time (T2min) and a maximum allowable non-aeration time (T2max) of the said mixed liquor;
- fixing a low set value (SB N03) and at least one high set value (SH N03) of the nitrate content in the treated water or the mixed liquor;
- fixing at least one high set value of the SH redox potential of the said mixed liquor;
and **in that** it comprises additional steps consisting of:
- continuously measuring the nitrate content in the treated water or the mixed liquor;
- continuously measuring the redox potential in the mixed liquor in the aeration pond;
- measuring the aeration time T1 and the non-aeration time T2 of the mixed liquor;
- not aerating the mixed liquor
either for as long as the measured nitrate content remains less than the said low set value (SB NO3) and the measured non-aeration time T2 is less than the minimum allowable non-aeration time T2min,
or when the measured nitrate content remains greater than the said low set value (SB NO3) and the measured non-aeration time T2 has not reached the maximum allowable non-aeration time T2max,
- aerating the mixed liquor
either for as long as the measured nitrate content remains greater than the said high set value (SH NO3) or when the value of the measured redox potential remains greater than the said high set value of the redox potential (SH redox) and the measured aeration time T1 is less than the minimum allowable aeration time T1min,
or when the measured nitrate content remains less than the said high set value (SH NO3) or when the value of the measured redox potential remains less than the said high set value of the redox potential (SH redox) and the measured aeration time T1 has not reached the maximum allowable aeration time T1max.

2. Process according to claim 1, **characterised in that** the process includes additional preliminary steps consisting of fixing a very high set value (STH N03) of the nitrate content in the treated water or the mixed liquor and a very high set value (STH Redox) of the redox potential of the mixed liquor,
and **in that** it consists of:
- not aerating the mixed liquor
either as long as the measured nitrate content remains less than the said low set value (SB N03) and the measured non-aeration time T2 is less than the minimum allowable non-aeration time T2min,
or when the measured nitrate content remains greater than the said low set value (SB N03) but the measured non-aeration time T2 has not reached the maximum allowable non-aeration time T2max,
- aerating the mixed liquor
either as long as the measured nitrate content remains greater than the said high set value (SH N03) or the value of the measured redox potential remains greater than the said high redox potential set value (SH redox),
and the measured aeration time T1 is less than the minimum allowable aeration time T1min,
and the measured nitrate content has not reached the said very high set value (STH N03) or the measured redox potential has not reached the said very high set value (STH Redox),
or when the measured nitrate content remains less than the said high set value (SH NO3) or the measured redox potential value remains less than the said high set value of the redox potential (SH redox) but the measured aeration time T1 has not reached the maximum allowable aeration time T1 max.

3. Process according to claim 2 **characterised in that** it includes additional steps consisting of:
- fixing at least one set value of the slope of the curve representing the variation of the redox potential in the mixed liquor with time;
- continuously calculating the said slope;
- continuously regulating the dispensed airflow during aeration to keep a redox slope constant and approximately equal to the said slope set value.

4. Process according to any one of claims 1 to 3 **characterised in that** the said separation step is a settlement step.

5. Process according to any one of claims 1 to 3 **characterised in that** the said separation step is a filtration step on at least one filtration membrane.

6. Process according to claim 5 **characterised in that** the said separation step consists of filtering the mixed liquor from the said biological pond on membranes, and is implemented in at least one external filtration loop provided with immersed or pressurised membranes.

7. Process according to claim 5 **characterised in that** the said separation step is performed using at least one membrane immersed in the said biological pond.

8. Process according to claims 3 and 7 comprising a step for aerating the said immersed membrane to prevent it from getting clogged or to unclog it, and in that it comprises steps for measuring the filtered water flow and for regulating the air flow dispensed for aeration of the said membrane as a function of the filtered water flow.

## Patentansprüche

1. Biologisches Verfahren zur Behandlung von Wasser, das die folgenden Schritte aufweist:
- Leiten des besagten Wassers durch mindestens ein biologisches Becken, welches eine freie oder gemischte Biomasse aufnimmt, wobei innerhalb dieses Beckens die oxydierenden und die reduzierenden Perioden sich jeweils durch Anfahren und Anhalten der Belüftungsmittel abwechseln und
- die gemischte Flüssigkeit im biologischen Becken mindestens einen Trennschritt durchlaufen zu lassen, mit dem Schlämme und behandeltes Wasser erzielt werden,
**dadurch gekennzeichnet, dass** das Verfahren die folgenden vorhergehenden Schritte aufweist:
- Festlegen einer geringsten zulässigen Belüftungszeit (T1min), einer maximalen zulässigen Belüftungszeit (T1max), einer geringsten zulässigen Zeit der Nicht-Belüftung (T2min) und einer maximalen zulässigen Zeit der Nicht-Belüftung (T2max) der besagten gemischten Flüssigkeit;
- Festlegen eines tiefen Referenzwertes (SB N03) und mindestens eines hohen Referenzwertes (SH N03) für den Nitratgehalt des behandelten Wassers oder der gemischten Flüssigkeit;
- Festlegen von mindestens einem hohen Referenzwert für das Oxydations-Reduktions-Potential (SH redox) der besagten gemischten Flüssigkeit;
und dadurch, dass das Verfahren die folgenden Zusatzschritte aufweist:
- kontinuierliches Messen des Nitratgehaltes des behandelten Wassers oder der gemischten Flüssigkeit;
- kontinuierliches Messen des Oxydations-Reduktions-Potentials der im Belüftungsbecken vorhandenen gemischten Flüssigkeit;
- Messen der Belüftungszeit T1 und der Zeit der Nicht-Belüftung T2 der gemischten Flüssigkeit;
- Nicht-Belüften der gemischten Flüssigkeit,
entweder solange der gemessene Nitratgehalt unterhalb des besagten tiefen Referenzwertes (SB N03) und die gemessene Zeit der Nicht-Belüftung T2 unterhalb der geringsten zulässigen Zeit der Nicht-Belüftung T2min liegt,
oder solange der gemessene Nitratgehalt oberhalb des besagten tiefen Referenzwertes (SB N03) liegt, die gemessene Zeit der Nicht-Belüftung T2 die zulässige maximale Zeit der Nicht-Belüftung T2max jedoch nicht erreicht;
- Belüften der gemischten Flüssigkeit,
entweder solange der gemessene Nitratgehalt oberhalb des besagten hohen Referenzwertes (SH N03) liegt oder wenn der gemessene Wert des Oxydations-Reduktions-Potentials oberhalb des besagten hohen Referenzwertes für das Oxydations-Reduktions-Potentials (SH redox) liegt und die gemessene Belüftungszeit T1 unterhalb der geringsten zulässigen Belüftungszeit T1 min liegt,
oder wenn der gemessene Nitratgehalt unterhalb des besagten hohen Referenzwertes (SH N03) liegt oder der Wert des gemessenen Oxydations-Reduktions-Potentials unterhalb des besagten hohen Referenzwertes des Oxydations-Reduktions-Potentials (SH redox) liegt, wobei die gemessene Belüftungszeit T1 jedoch unterhalb der maximalen zulässigen Belüftungszeit T1max bleibt.

2. Verfahren nach Anspruch 1, **dadurch gekennzeichnet, dass** es die vorhergehenden zusätzlichen Schritte aufweist, die darin bestehen, einen sehr hohen Referenzwert (STH N03) für den Nitratgehalt des behandelten Wassers oder der gemischten Flüssigkeit sowie einen sehr hohen Referenzwert (STH redox) für das Oxydations-Reduktions-Potential der gemischten Flüssigkeit festzulegen,
wobei das Verfahren darin besteht:
- die gemischte Flüssigkeit nicht zu belüften,
entweder solange der gemessene Nitratgehalt unterhalb des besagten tiefen Referenzwertes (SB N03) bleibt und die gemessene Nicht-Belüftungszeit T2 geringer ist, als die geringste zulässige Nicht-Belüftungszeit T2min,
oder, wenn der gemessene Nitratgehalt oberhalb des besagten tiefen Referenzwertes (SB N03) bleibt, aber die gemessene Nicht-Belüftungszeit T2 die maximal zulässige Nicht-Belüftungszeit T2 nicht erreicht;
- die gemischte Flüssigkeit zu belüften,
entweder solange der gemessene Nitratgehalt oberhalb des besagten hohen Referenzwertes (SH N03) bleibt oder der gemessene Wert des Oxydations-Reduktions-Potentials oberhalb des besagten hohen Referenzwertes des Oxydations-Reduktions-Potentials (SH redox) bleibt,
solange die gemessene Belüftungszeit T1 unterhalb der geringsten zulässigen Belüftungszeit T1min bleibt,
und solange der gemessene Nitratgehalt den besagten sehr hohen Referenzwert (STN N03) nicht erreicht oder der gemessene Wert des Oxydations-Reduktions-Potentials den besagten sehr hohen Referenzwert (STH redox) nicht erreicht,
oder wenn der gemessene Nitratgehalt unterhalb des besagten hohen Referenzwertes (SH N03) bleibt oder der gemessene Wert des Oxydations-Reduktions-Potentials unterhalb des besagten hohen Referenzwertes des Oxydations-Reduktions-Potentials (SH redox) bleibt, wobei jedoch die gemessene Belüftungszeit T1 die maximale zulässige Belüftungszeit T1 max nicht erreicht.

3. Verfahren nach Anspruch 2, **dadurch gekennzeichnet, dass** es die folgenden zusätzlichen Schritte aufweist:
- Festlegen von mindestens einem Referenzwert der Steigung der für den Verlauf des Oxydations-Reduktions-Potentials der gemischten Flüssigkeit in der Zeit repräsentativen Kurve,
- kontinuierliches Berechnen der besagten Steigung,
- kontinuierliches Regulieren des während der Belüftung zugeführten Luftdurchsatzes, um eine konstante Oxydations-Reduktions-Steigung zu bewahren, die in etwa dem Referenzwert der Steigung gleicht.

4. Verfahren nach einem der Ansprüche 1 bis 3, **dadurch gekennzeichnet, dass** es sich bei dem besagten Trennungsschritt um einen Dekantationsschritt handelt.

5. Verfahren nach einem der Ansprüche 1 bis 3, **dadurch gekennzeichnet, dass** es sich bei dem besagten Trennungsschritt um einen Filtrierungsschritt über mindestens eine Filtermembrane handelt.

6. Verfahren nach Anspruch 5, **dadurch gekennzeichnet, dass** es sich bei dem besagten Trennungsschritt um das Filtern der aus dem besagten biologischen Becken kommenden gemischten Flüssigkeit über eine Membrane handelt, wobei das Verfahren in mindestens einer äußeren Filtrierungsschleife eingesetzt wird, die eingetauchte oder einem Unterdruck ausgesetzte Membranen aufweist.

7. Verfahren nach Anspruch 5, **dadurch gekennzeichnet, dass** der besagte Trennungsschritt mit Hilfe von mindestens einer in dem besagten biologischen Becken eingetauchten Membrane erfolgt.

8. Verfahren nach den Ansprüchen 3 und 7, **dadurch gekennzeichnet, dass** es einen Schritt zum Belüften der besagten eingetauchten Membrane aufweist, zum Vorbeugen der Verstopfung dieser Membrane oder zum Reinigen dieser Membrane und dadurch, dass es die Schritte aufweist, welche im Messen des Durchsatzes an gefiltertem Wasser und im Regulieren des für die Belüftung der besagten Membrane als Funktion des Durchsatzes an gefiltertem Wasser erforderlichen Luftdurchsatzes bestehen.
